(19) Europäisches Patentamt / European Patent Office / Office européen des brevets

(11) **EP 2 162 511 B1**

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(21) Anmeldenummer: **08784561.6**

(22) Anmeldetag: **27.06.2008**

(51) Int Cl.:
**C10K 1/16** *(2006.01)* **B01D 53/14** *(2006.01)*

(86) Internationale Anmeldenummer:
**PCT/EP2008/005253**

(87) Internationale Veröffentlichungsnummer:
**WO 2009/003644 (08.01.2009 Gazette 2009/02)**

(54) **VERFAHREN ZUR ENTFERNUNG VON AROMATISCHEN KOHLENWASSERSTOFFEN AUS KOKEREIGAS DURCH ABSORPTION**

REMOVAL OF AROMATIC HYDROCARBONS FROM COKING GAS BY ABSORPTION

PROCÉDÉ D'EXTRACTION D'HYDROCARBURES AROMATIQUES DE GAZ DE COKERIE PAR ABSORPTION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.06.2007 DE 102007030367**

(43) Veröffentlichungstag der Anmeldung:
**17.03.2010 Patentblatt 2010/11**

(73) Patentinhaber: **ThyssenKrupp Industrial Solutions AG**
**45143 Essen (DE)**

(72) Erfinder:
• **THIELERT, Holger**
**44379 Dortmund (DE)**
• **WOZNY, Günter**
**16548 Gliencke (DE)**
• **RICHTER, Diethmar**
**44379 Dortmund (DE)**

(74) Vertreter: **Albrecht, Rainer Harald et al**
**Andrejewski - Honke**
**Patent- und Rechtsanwälte**
**An der Reichsbank 8**
**45127 Essen (DE)**

(56) Entgegenhaltungen:
**DE-A1- 19 824 747 DE-A1-102005 009 625**

• **KUZ'MINA E YA ET AL: "A NEW PETROLEUM WASH OIL TO RECOVER CRUDE BENZOL." COKE AND CHEMISTRY U.S.S.R., Nr. 12, 1987, Seiten 45-49, XP002498343**
• **"SOLVENT VAPOUR SEPN FROM WASTE GAS - USING (M)ETHYLESTER OF ANIMAL AND VEGETABLE FATTY ACID" PATENT ABSTRACTS OF JAPAN, XX, XX, 1. Januar 1976 (1976-01-01), Seite 6, XP001050197 -& JP 51 063384 A (TSUBOI SUEJI; MATSUKI TOKUTARO) 1. Juni 1976 (1976-06-01)**

## Beschreibung

Die Erfindung betrifft ein Verfahren zur Entfernung von aromatischen Kohlenwasserstoffen aus Kokereigas. Das Kokereigas wird in einem Gaswäscher mit einer Waschflüssigkeit in Kontakt gebracht und durch Absorption werden aromatische Kohlenwasserstoffe aus dem Kokereigas abgetrennt. Die mit aromatischen Kohlenwasserstoffen angereicherte Waschflüssigkeit wird anschließend erwärmt und die aromatischen Kohlenwasserstoffe werden durch Strippen mit Wasserdampf aus der Waschflüssigkeit abgetrieben. Nach einer Kühlung wird die Waschflüssigkeit dann wieder dem Gaswäscher zugeführt.

Bei der Verkokung von Kohle werden aromatische Kohlenwasserstoffe als Bestandteil des entstehenden Kokereigases freigesetzt. Um die aromatischen Kohlenwasserstoffe einer weiteren Verwertung zuführen zu können und nicht an die Umgebung abzugeben, werden diese bei der Aufbereitung des Kokereigases zumeist nach der Abscheidung von Teer und Ammoniak aus dem Kokereigas herausgewaschen. Als Waschflüssigkeit wird in der Praxis ein Waschöl auf der Basis einer Teerölfraktion verwendet, welche durch die Verarbeitung von Steinkohle erzeugt wird. Entsprechend der hauptsächlich enthaltenen aromatischen Kohlenwasserstoffe Benzol, Toluol, Xylol wird dieser Verfahrensschritt allgemein auch als BTX-Wäsche oder Benzol-Wäsche bezeichnet. Die genannten aromatischen Kohlenwasserstoffe werden gemeinsam auch als Rohbenzol bezeichnet, wobei der Anteil von Rohbenzol abhängig von der für den Verkokungsprozess eingesetzten Kohle und der Prozessführung typischerweise zwischen 20 und 40 Gramm pro Normalkubikmeter ($Nm^3$) beträgt. Das Rohbenzol weist typischerweise zwischen 55 bis 75 % Benzol, 13 bis 19 % Toluol und zwischen 5 bis 10 % Xylole auf. Zusätzlich enthält das Kokereigas auch multizyklische aromatische Kohlenwasserstoffe, wie insbesondere Naphtalin, welche von dem Waschöl aufgenommen werden können. Ferner enthält das Kokereigas Verunreinigungen, insbesondere $H_2S$, HCN, $NH_3$ sowie organische Schwefelverbindungen. Eine typische Zusammensetzung eines Kokereigases weist beispielsweise auf:

54 bis 62 Volumen-%$H_2$
23 bis 28 Volumen-%$CH_4$
6,2 bis 8 Volumen-% CO
$H_2S$ ca. 7g/$Nm^3$
HCN ca. 1,5 g/$Nm^3$
$NH_3$ 7g/$Nm^3$
$S_{ORG}$ ca. 0,5 g/$Nm^3$
BTX bis 40 g/$Nm^3$
Naphthalin bis 2 g/$Nm^3$

Die Verfahren zur BTX-Wäsche werden in ihren Grundzügen seit Jahrzehnten unverändert eingesetzt und sind beispielsweise in dem Fachbuch O. Grosskinsky, "Handbuch des Kokereiwesens", Band 2, Auflage 1958, Seiten 137 ff. beschrieben. Die BTX-Wäsche erfolgt in einem oder mehreren hintereinander angeordneten Wäschern, wobei zur Absorption der aromatischen Kohlenwasserstoffe durch das Waschöl ein inniger Kontakt zwischen dem Kokereigas und dem Waschöl als Waschflüssigkeit gewährleistet werden muss. Ein inniger Kontakt kann einerseits durch eine feine Zerstäubung des Waschöls und andererseits durch dünne Ölfilme erreicht werden. Besonders vorteilhaft ist die Kombination einer Berieselungseinrichtung einerseits und von Horden, Füllkörpern oder sonstigen Einbauten andererseits, wobei die aus der Berieselungsanlage kommenden Öltröpfchen zu einem Ölfilm mit möglichst großer Oberfläche ausgebreitet werden. Die Löslichkeit von Benzol, Toluol und Xylol ist insbesondere von dem Dampfdruck der verschiedenen Komponenten abhängig, weshalb das Waschöl bei vergleichsweise niedrigen Temperaturen, vorzugsweise etwa bei Zimmertemperatur, dem Wäscher zugeführt wird. Andererseits muss das Waschöl auch eine ausreichende Fließfähigkeit und geringe Viskosität aufweisen, damit es gut zu zerstäuben ist und eine große Oberfläche bilden kann. Das mit aromatischen Kohlenwasserstoffen angereicherte Waschöl, welches sich am Boden des Wäschers sammelt, wird abgezogen, wobei das Rohbenzol nachfolgend bei erhöhter Temperatur durch Strippen mit Wasserdampf aus dem Waschöl abgetrieben wird. Das Waschöl wird dann nach Abkühlung wieder dem Wäscher zugeführt. Um bei einem möglichst großen Durchsatz an Kokereigas eine weitgehende Auswaschung von Rohbenzol zu erreichen, wird das Waschöl mit einem Überschuss dem Wäscher zugegeben. Um bei den in modernen Kokereien anfallenden Mengen an Kokereigas die BTX-Wäsche durchführen zu können, sind große Mengen an Waschöl erforderlich.

Als Waschflüssigkeit ist versuchsweise auch fossiles Dieselöl eingesetzt worden. Dabei wurde allerdings festgestellt, dass beim Strippen mit Wasserdampf unter den dabei auftretenden Temperaturen klebrige Rückstände, gummiartige Konsistenz im Waschöl entstehen und ausgefällt werden. Die Rückstände resultieren aus Copolymerisationsreaktionen, an denen die in Kokereigas enthaltenen Verunreinigungen, insbesondere HCN und $H_2S$ als Komplexbildner beteiligt sind. Zur Abtrennung der klebrigen, gummiartigen Ausfällungen müssen Dekanter in dem Waschflüssigkeitskreislauf vorgesehen werden. Ferner ist es notwendig, einen relativ großen Teilstrom der Waschflüssigkeit aus dem Kreislauf auszuschleusen und durch frische Waschflüssigkeit zu ersetzen, wenn als Waschflüssigkeit fossiles Dieselöl eingesetzt wird. Die aus dem Dekanter abgezogenen Rückstände, das aus dem Kreislauf ausgeschleuste fossile Dieselöl müssen entsorgt werden. Die beschriebenen Maßnahmen sind aufwendig und verteuern den Prozess. Die Komplexreaktionen sind temperaturabhängig. Bei hohen Temperaturen von mehr als 120°C die notwendig sind, um die Regenerierung der Waschflüssigkeit durch Dampfstrippen wirtschaftlich betreiben zu können, ist die anfallende Menge der klebrigen Rückstände so groß, dass der Prozess nicht mehr betrieben werden kann.

E. Ya. Kuz'mina et al., Koks i Khimiya, 12, Seiten 27-29, 1987 offenbart eine neue fossile Waschflüssigkeit zur Entfernung vom Rohbenzol aus Kokereigas.

Vor diesem Hintergrund liegt der Erfindung die Aufgabe zugrunde, die Absorption von aromatischen Kohlenwasserstoffen aus Kokereigas im Rahmen einer BTX-Wäsche zu verbessern. Insbesondere soll die eingesetzte Waschflüssigkeit leicht handhabbar und durch Strippen mit Wasserdampf bei hohen Temperaturen problemlos regenerierbar sein.

Ausgehend von einem Verfahren mit den eingangs beschriebenen Merkmalen wird die Aufgabe erfindungsgemäß dadurch gelöst, dass Biodiesel als Waschflüssigkeit verwendet wird. Der Begriff "Biodiesel" bezieht sich im Rahmen der Erfindung auf einen organischen Kraftstoff, der im Gegensatz zu fossilem Dieselöl nicht aus fossilem Rohöl sondern durch die Umesterung von Pflanzenölen gewonnen wird.

Hauptbestandteil von Biodiesel sind Fettsäuremethylester (FAME). Biodiesel ist in großen Mengen kostengünstig verfügbar. Im Vergleich zu fossilen Ölen und Brennstoffen zeichnet sich Biodiesel dadurch aus, dass es fast keinen Schwefel und nur einen geringen Anteil an weiteren Schadstoffen enthält. Überraschend wurde festgestellt, dass Biodiesel nach Absorption aromatischer Kohlenwasserstoffe bei hohen Temperaturen, insbesondere bei Temperaturen oberhalb 150°C, durch Strippen mit überhitztem Wasserdampf problemlos regeneriert werden kann und dass es im Unterschied zur Verwendung von fossilen Dieselölen nicht zu Ausfällungen klebriger, gummiartiger Substanzen kommt.

Ferner ist der Biodiesel zu einem großen Teil biologisch abbaubar und weist eine verbesserte $CO_2$-Bilanz auf. Biodiesel kann auch aufgrund seiner geringeren Gefahren für die Umwelt problemlos transportiert und gelagert werden, wobei auch der Entsorgungsaufwand bei einem Austausch des Biodiesels als Waschflüssigkeit für die BTX-Wäsche im Vergleich zu dem bekannten Steinkohlenteer-Waschöl reduziert ist.

Die Zusammensetzung und die chemischen und physikalischen Eigenschaften von Biodiesel sind beispielsweise in den Normen DIN EN14214 (November 2003) und ASTM D 6751-07A beschrieben. Die genannten Normen beziehen sich auf den Einsatz von Biodiesel als Brennstoff. Vor diesem Hintergrund können für den Einsatz als Waschflüssigkeit zur Absorption von aromatischen Kohlenwasserstoffen auch zusätzlich zu den genormten Typen von Biodiesel Varianten von Biodiesel eingesetzt werden, die in einem gewissen Maße von den genannten Normen abweichen können.

Biodiesel zeichnet sich insbesondere bei den für die Durchführung der BTX-Wäsche angestrebten niedrigen Temperaturen durch ein sehr gutes Absorptionsvermögen bezüglich Benzol, Toluol und Xylolen aus. Das Kokereigas wir in einen Gaswäscher mit dem Biodiesel in Kontakt gebracht, wobei die aromatischen Kohlenwasserstoffe aus dem Kokereigas in den Biodiesel absorbiert werden. Der Biodiesel wird zweckmäßig an der Oberseite des Wäschers zugegeben und durchströmt den Wäscher im Gegenstrom zu dem Kokereigas. Der mit den aromatischen Kohlenwasserstoffen angereicherte Biodiesel wird in einem unteren Bereich des Wäschers abgezogen. Der Biodiesel wird dem Wäscher im Rahmen der Erfindung üblicherweise mit einer Temperatur zwischen 10°C und 50°C, vorzugsweise zwischen 20°C und 40°C, besonders bevorzugt etwa 30°C zugegeben. Das Auswaschen des Rohbenzols mit der Waschflüssigkeit ist ein physikalischer Vorgang, bei dem die Verteilung der Stoffmenge der BTX-Komponenten, auf die Gas- und Flüssigkeitsphase und damit deren Absorption sich aus einem Gleichgewichtszustand ergibt. Für die Phasengleichgewichtsbeziehung gilt vereinfacht:

$$y_i \cdot \varphi_i \cdot p = x_i \cdot \gamma_i \cdot p_{0i}^{LV}$$

Hierbei stellen $y_i$ und $x_i$ die Molanteile der betrachteten Komponente i in der Gas- sowie der Flüssigkeitsphase und p den Systemdruck dar. Bei dem Dampfdruck $p_{0i}^{LV}$ handelt es sich um eine Stoffeigenschaft der betrachteten Komponente i, welche von der Temperatur abhängt. Um Abweichungen vom idealen Verhalten beschreiben zu können, werden der Fugazitätskoeffizient ($\varphi_i$ in der Gasphase, welcher üblicherweise nur geringfügig von 1 abweicht, sowie der Aktivitätskoeffizient $\gamma_i$ in der Flüssigphase verwendet. Bei dem Aktivitätskoeffizienten $\gamma_i$ handelt es sich um eine Größe, welche maßgeblich das Verhalten der verschiedenen Moleküle zueinander beschreibt und somit eine Funktion der Zusammensetzung in der Flüssigkeit als auch der Temperatur ist. Um eine möglichst effektive Absorption zu gewährleisten, werden $\gamma_i$ Werte in der Nähe von 1 bzw. unterhalb von 1 erwünscht, da dies einer Vergrößerung der Absorptionsfähigkeit im Vergleich zum idealen Verhalten entspricht. Überraschenderweise werden für Biodiesel als Waschflüssigkeit insbesondere bei niedrigen Temperaturen von etwa 30°C niedrigere Aktivitätskoeffizienten als für das herkömmliche, Teeröl-basierte Waschöl und somit ein deutlich verbessertes Absorptionsvermögen beobachtet. Im Vergleich zu der herkömmlichen BTX-Wäsche unter Verwendung von fossilem Waschöl auf der Basis einer Teerölfraktion können daher die im Waschflüssigkeitskreislauf zu fördernde Waschflüssigkeitsmenge reduziert und die Betriebskosten gesenkt werden. Des Weiteren kann durch die höhere Absorptionsfähigkeit auch Rohbenzol zu einem größeren Anteil aus dem Kokereigas herausgewaschen werden.

Neben dem Phasengleichgewicht sind für die Absorption von aromatischen Kohlenwasserstoffen aus Kokereigas mittels einer Waschflüssigkeit auch die Dichte, die spezifische Wärmekapazität und die Viskosität der Waschflüssigkeit von entscheidender Bedeutung. So weist Biodiesel eine höhere Wärmekapazität als das bekannte fossile Waschöl auf. Da die Erwärmung der Waschflüssigkeit in dem Wäscher zu einer Reduzierung des Absorptionsvermögen führt, ergeben sich hier Vorteile zugunsten von Biodiesel. Während die Dichte von Biodiesel üblicherweise geringer als die Dichte von Waschöl ist, stimmen die Viskositätswerte in etwa überein.

Zur Regeneration wird der mit aromatischen Kohlenwasserstoffen angereicherte Biodiesel auf eine Temperatur zwischen 100°C und 250°C erwärmt. Der angegebene Temperaturbereich liegt oberhalb der Siedepunkte von Benzol, Toluol und Xylolen, so dass diese sich aus der Waschflüssigkeit lösen. Als besonders effektiv hat sich ein Abtreiben des Rohbenzols mit Wasserdampf erwiesen. In dem angegebenen Temperaturbereich werden weder ein nennenswertes Verdampfen noch eine Zersetzung des Biodiesels beobachtet. Eine thermische Zersetzung und ein Sieden des Biodiesels treten üblicherweise abhängig von der genauen Zusammensetzung erst bei Temperaturen oberhalb von 300°C ein.

Vorzugsweise wird der Biodiesel zum Abtreiben der absorbierten aromatischen Kohlenwasserstoffe mit überhitztem Wasserdampf, der eine Temperatur von mehr als 150°C aufweist, gestrippt. Besonders bevorzugt ist eine Stripptemperatur von etwa 180°C oder mehr. Überraschend wären auch bei hohen Stripptemperaturen keine Ausfällungen von Substanzen beobachtet, die auf Copolymerisationsreaktionen unter Mitwirkung der in Kokereigas enthaltenen Verunreinigung zurückzuführen sind. Im Versuch wurde der Biodiesel auf eine Temperatur von 200°C erhitzt und mit Rohbenzol BTX, d. h. Benzol, Toluol und Xylol entsprechend der im Kokereigas enthaltenen Zusammensetzung, sowie mit $H_2S$, welches die Bildung von Ausfällungen durch Copolymerisationsreaktionen in fossilem Dieselöl begünstigt, angereichert. Während sich bei einem Vergleichsversuch mit fossilem Dieselöl kugelförmige Partikel bildeten, die sich auf den Boden des Behälters absetzten, wurden bei Verwendung von Biodiesel keinerlei Ausfällungen beobachtet.

Der Biodiesel wird aus Pflanzenölen gewonnen. Typische Ausgangsstoffe sind je nach den örtlichen Gegebenheiten beispielsweise Raps-, Palm-, Sonnenblumen- und Sojaöl, aus denen die entsprechenden Methylester gebildet werden. Im Rahmen der Erfindung ist im besonderen Maße Rapsölmethylester (RME) geeignet, welches in Regionen mit einem gemäßigten Klima in großen Mengen produziert werden kann und kommerziell verfügbar ist.

Die Erfindung wird im Folgenden anhand eines exemplarischen Beispiels erläutert. Zum Vergleich von Biodiesel und einem herkömmlichen Waschöl als Waschflüssigkeit bei einer BTX-Wäsche wurden die Eigenschaften von Steinkohlenteerwaschöl und Rapsölmethylester (RME) verglichen. Tabelle 1 zeigt neben den Aktivierungskoeffizienten $\gamma$ für die BTX-Komponenten die Wärmekapazität $c_p$ in J/gK (Joule pro Gramm Kelvin) und die Dichte in kg/l (Kilogramm pro Liter) für Waschöl und RME, jeweils bei 30°C.

Tabelle 1

|  | Waschöl | RME |
|---|---|---|
| $\gamma$ Benzol (30°C) | 1,7 | 0,6 |
| $\gamma$ Toluol (30°C | 2,7 | 0,7 |
| $\gamma$m-Xylol (30°C) | 4,6 | 2,4 |
| $c_p$ [J/gk] | 1,7 | 2,2 |
| $\rho$ [kg/l] | 1,07 | 0,88 |

Für Benzol, Toluol und Xylol wird für RME ein niedrigerer Aktivitätskoeffizient als für Waschöl und somit ein besseres Absorptionsvermögen bei 30°C beobachtet. Bei einer Erhöhung der Temperatur nähern sich die Werte der Aktivitätskoeffizienten einem Wert von 1 an, wobei RME stets ein besseres Absorptionsvermögen als das konventionelle Waschöl aufweist. Zusätzlich weist RME in vorteilhafter Weise eine höhere Wärmekapazität und eine niedrigere Dichte als Steinkohlenteer-Waschöl auf. Während frisches RME eine geringere Viskosität als Waschöl aufweist, nähern sich die Werte der Viskositäten bei einem zyklischen Einsatz der Waschflüssigkeit und einem wiederholten Abtreiben der gelösten aromatischen Kohlenwasserstoffe durch Erhitzen einander an. Der Rapsölmethylester weist auch eine ausreichende Temperaturbeständigkeit auf. Die höchsten Temperaturen werden bei dem Kreislauf zur BTX-Wäsche beim Abtreiben der aromatischen Kohlenwasserstoffe durch heißen Wasserdampf erreicht. Bei der Zuführung von Dampf mit einer Temperatur von 235°C erfolgt keine Zersetzung des Biodiesels. Zusätzlich sind auch die Verluste durch ein Verdampfen im Vergleich zu Waschöl vernachlässigbar gering. Bei einem länger dauernden Einsatz von RME wird lediglich eine gewisse Aufhellung des Biodiesels beobachtet, die auf das Verschwinden eines geringen Anteils von leicht siedenden Komponenten zurückzuführen ist. Ausflockungen oder ein Verschlammen werden nicht beobachtet, so dass Biodiesel für einen Langzeiteinsatz zur Absorption von aromatischen Kohlenwasserstoffen aus Kokereigas geeignet ist.

**Patentansprüche**

1. Verfahren zur Entfernung von aromatischen Kohlenwasserstoffen aus Kokereigas,
   wobei das Kokereigas in einem Gaswäscher mit einer Waschflüssigkeit in Kontakt gebracht wird und durch Absorption aromatische Kohlenwasserstoffe aus dem Kokereigas abgetrennt werden,
wobei die mit aromatischen Kohlenwasserstoffen angereicherte Waschflüssigkeit anschließend erwärmt wird und die aromatischen Kohlenwasserstoffe durch Strippen mit Wasserdampf aus der Waschflüssigkeit abgetrieben werden und
wobei die Waschflüssigkeit nach einer Kühlung wieder dem Gaswäscher zugeführt wird, **dadurch gekennzeichnet, dass** als Waschflüssigkeit Biodiesel verwendet wird, welcher durch Umesterung von Pflanzenölen gewonnen wird.

2. Verfahren nach Anspruch 1, **dadurch gekennzeichnet, dass** der Biodiesel im Wesentlichen aus Rapsölmethylester (RME) besteht.

3. Verfahren nach Anspruch 1 oder 2, **dadurch gekennzeichnet, dass** der Biodiesel am Kopf des Gaswäschers zugegeben wird und den Gaswäscher im Gegenstrom zu dem Kokereigas durchströmt und dass der mit aromatischen Kohlenwasserstoffen angereicherte Biodiesel in einem unteren Bereich des Gaswäschers abgezogen wird.

4. Verfahren nach einem der Ansprüche 1 bis 3, **dadurch gekennzeichnet, dass** der Biodiesel den Gaswäscher mit einer Temperatur zwischen 10°C und 50°C zugegeben wird.

5. Verfahren nach Anspruch 4, **dadurch gekennzeichnet, dass** der Biodiesel mit einer Temperatur zwischen 20°C und 40°C dem Gaswäscher zugeführt wird.

6. Verfahren nach einem der Ansprüche 1 bis 5, **dadurch gekennzeichnet, dass** der Biodiesel zum Abtreiben der absorbierten aromatischen Kohlenwasserstoffe auf eine Temperatur zwischen 100°C und 250°C erhitzt wird.

7. Verfahren nach Anspruch 6, **dadurch gekennzeichnet, dass** der Biodiesel zum Abtreiben der absorbierten aromatischen Kohlenwasserstoffe mit überhitztem Wasserdampf gestrippt wird, der eine Temperatur von mehr als 150°C aufweist.

## Claims

1. A method for removing aromatic hydrocarbons from coke oven gas,
wherein the coke oven gas is brought into contact with a scrubbing liquid in a gas scrubber and aromatic hydrocarbons are separated by absorption from the coke oven gas,
wherein the scrubbing liquid enriched with aromatic hydrocarbons is subsequently heated and the aromatic hydrocarbons are removed from the scrubbing liquid by stripping with water vapour and
wherein the scrubbing liquid after cooling is again fed into the gas scrubber, **characterised in that** the scrubbing liquid used is bio-Diesel which is obtained by transesterification of vegetable oils.

2. The method according to claim 1, **characterised in that** the bio-Diesel essentially consists of rape oil methyl ester (RME).

3. The method according to claim 1 or 2, **characterised in that** the bio-Diesel is added at the head of the gas scrubber and flows through the gas scrubber in the opposite direction to the coke oven gas and **in that** the bio-Diesel enriched with aromatic hydrocarbons is withdrawn in a lower section of the gas scrubber.

4. The method according to one of claims 1 to 3, **characterised in that** the bio-Diesel is added to the gas scrubber at a temperature between 10 °C and 50 °C.

5. The method according to claim 4, **characterised in that** the bio-Diesel is added to the gas scrubber at a temperature between 20 °C and 40 °C.

6. The method according to one of claims 1 to 5, **characterised in that** the bio-Diesel, for removing the absorbed aromatic hydrocarbons is heated to a temperature between 100 °C and 250 °C.

7. The method according to claim 6, **characterised in that** the bio-Diesel for removing the absorbed aromatic hydrocarbons is stripped with superheated steam which has a temperature of more than 150 °C.

## Revendications

1. Procédé pour l'extraction d'hydrocarbures aromatiques de gaz de cokerie,
dans lequel le gaz de cokerie est mis en contact avec un liquide de lavage dans un laveur de gaz, et des hydrocarbures aromatiques étant séparés du gaz de cokerie par absorption,
dans lequel le liquide de lavage enrichi en hydrocarbures aromatiques est ensuite chauffé, et les hydrocarbures aromatiques étant ensuite entraînés à la vapeur d'eau hors du liquide de lavage par stripage, et
dans lequel, après un refroidissement, le liquide de lavage est de nouveau amené au laveur de gaz, **caractérisé en ce qu'**en guise de liquide de lavage, on utilise du biodiesel qui est obtenu par transestérification à partir d'huiles végétales.

2. Procédé selon la revendication 1, **caractérisé en ce que** le biodiesel se compose essentiellement d'ester méthylique d'huile de colza (RME).

**3.** Procédé selon la revendication 1 ou 2, **caractérisé en ce que** le biodiesel est ajouté au niveau de la tête du laveur de gaz et traverse le laveur de gaz en un flux contraire au gaz de cokerie, et **en ce que** le biodiesel enrichi avec des hydrocarbures aromatiques est soutiré dans une zone inférieure du laveur de gaz.

**4.** Procédé selon l'une des revendications 1 à 3, **caractérisé en ce que** le biodiesel est ajouté dans le laveur de gaz à une température comprise entre 10 °C et 50 °C.

**5.** Procédé selon la revendication 4, **caractérisé en ce que** le biodiesel est amené au laveur de gaz à une température comprise entre 20 °C et 40 °C.

**6.** Procédé selon l'une des revendications 1 à 5, **caractérisé en ce que** le biodiesel est chauffé à une température comprise entre 100 °C et 250 °C pour l'entraînement des hydrocarbures aromatiques absorbés.

**7.** Procédé selon la revendication 6, **caractérisé en ce que** le biodiesel est strippé avec de la vapeur d'eau surchauffée pour l'entraînement des hydrocarbures aromatiques absorbés, laquelle vapeur d'eau présente une température de plus de 150 °C.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FACHBUCH O. GROSSKINSKY.** Handbuch des Kokereiwesens. 1958, vol. 2, 137 ff
- **E. YA. KUZ'MINA et al.** *Koks i Khimiya,* 1987, vol. 12, 27-29